# EUROPÄISCHE PATENTANMELDUNG

(11) **EP 0 562 594 A1**
(43) Veröffentlichungstag der Anmeldung: **29.09.1993**
(21) Anmeldenummer: 93104926.6
(22) Anmeldetag: 25.03.1993
(51) Int. Cl.: B60K 17/356, B60K 23/08

(54) **Antrieb für zweiachsige land- und/oder bauwirtschaftlich nutzbare Fahrzeuge**

(30) Priorität: 27.03.1992 DE 4209950
(71) Anmelder: Xaver Fendt GmbH & Co., D-87609 Marktoberdorf (DE)
(72) Erfinder: Heindl, Richard, W-8952 Marktoberdorf (DE)

(57) **Zusammenfassung**

2.1 Für derartige Fahrzeuge sind Antriebe bekannt, bei denen die hintere Fahrzeugachse über ein hydrostatisch-mechanisches Leistungsverzweigungsgetriebe mit zwei Hydromotoren und die vordere Fahrzeugachse über einem mechanischen Antriebsstrang angetrieben ist, dessen Drehzahl in einem konstanten Verhältnis zur Drehzahl der Räder der hinteren Fahrzeugachse steht. Aufgrund dieser Tatsache unterliegen die Reifen einem erheblichen Verschleiß.

2.2 Um ohne Zuhilfenahme eines gesonderten stufenlosen Getriebes im Antriebsstrang zur vorderen Fahrzeugachse die Einsatzmöglichkeit des Fahrzeuges zu verbessern ist jeder Fahrzeugachse (V,H) mindestens ein Hydromotor (11,12) antriebsmäßig zugeordnet, wobei die Hydromotoren (11,12) wahlweise gemeinsam oder voneinander unabhängig verstellbar sind.

2.3 Derartige Antriebe eignen sich für alle hohe Zugkraft auf Straßen und natürlichem Gelände entwickelnde Fahrzeuge.

## Beschreibung

Die Erfindung betrifft einen Antrieb für zweiachsige land- und/oder bauwirtschaftlich nutzbare Fahrzeuge mit einem hydrostatisch-mechanischen Leistungsverzweigungsgetriebe, bei dem ein Teil der Fahrantriebsleistung einer Brennkraftmaschine zum Antrieb mindestens einer verstellbaren Hydropumpe dient, die mit mindestens zwei verstellbaren Hydromotoren zusammenarbeitet, und bei dem der Rest der Fahrantriebsleistung der Brennkraftmaschine unter Umgehung der Hydropumpe den Fahrzeugachsen zugeführt wird.

Bei einem aus der DE-PS 23 35 629 bekannten Antrieb dieser Art wird von der zum Antreiben der Hinterachse benötigten Antriebsleistung der Brennkraftmaschine ein Teil mittels eines Umlaufrädergetriebes zu einer Hydropumpe verzweigt, während ein weiterer Teil mechanisch auf das Differential der Hinterachse des Fahrzeuges übertragen wird. Die von der Hydraulikpumpe angetriebenen Hydromotoren besitzen eine gemeinsame Abtriebswelle und arbeiten mit dieser auf eine summierungsstelle vor dem Differential der Hinterachse. Der Antrieb der Vorderachse erfolgt über einen vom mechanischen Antriebsstrang zur Hinterachse abgeleiteten Antriebsstrang mit fester Übersetzung zwischen den Umfangsgeschwindigkeiten der Räder der Hinterachse und der Vorderachse.

Mit Fahrzeugen, die mit einem derartigen Antrieb ausgerüstet sind, ist in vielen Einsatzfällen, insbesondere beim Durchfahren enger Kurven, kein boden- und/oder reifenschonender Fahrbetrieb möglich.

Es soll daher ein Fahrzeugantrieb geschaffen werden, der bei einfachem Aufbau einen jegliche Schäden an der Bodenkrume und den Reifen ausschließenden Antrieb der vorderen Fahrzeugachse ermöglicht.

Bei gattungsfremden Antrieben, z. B. bei der DE-PS 34 08 991 ist zur Realisierung dieses Wunsches in den Antriebsstrang vom Fahrzeuggetriebe zur Vorderachse ein zusätzliches Getriebe vorgesehen, das beispielsweise ein zweistufiges Wechselgetriebe oder ein stufenloses Zugmittelgetriebe sein kann. Derartige Ausführungen weisen aber den Nachteil auf, daß solche Zusatzgetriebe im Vorderachsantriebsstrang nicht nur einen erheblichen Bedarf an Platz haben, der oftmals nur schwer zur Verfügung gestellt werden kann, sondern darüber hinaus einen erheblichen Bauaufwand erfordert und somit einen nicht vernachlässigbaren Kostenfaktor darstellt.

Zur Lösung der oben erläuterten Aufgabe werden daher die in Kennzeichen des Anspruches 1 wiedergegebenen Merkmale vorgeschlagen.

Die Erfindung stellt einen Antrieb zur Verfügung, der es erlaubt, die Fahrantriebsleistung unter Berücksichtigung der zwischen den Fahrzeugreifen und dem Boden gegebenen Traktion auf die Fahrzeugachsen zu verteilen. Bei stetig angepaßter Drehmomentaufteilung können daher die Räder der beiden Fahrzeugachsen mit gleichem, kontstantem Schlupf betrieben werden, wodurch die Übertragungsfähigkeit der Reifen bestmöglich ausgenutzt wird. Verspannungen im Antriebsstrang zwischen den Fahrzeugachsen, die zu übermäßiger Boden- und Reifenbeanspruchung führen und bisher den Allradbetrieb bei Transport- und Kurvenfahrten einschränkten, können selbst beim Durchfahren enger Kurven nicht auftreten. In Bezug auf die Vermeidung von Verspannungen im Antriebsstrang wirkt der Antrieb somit in Art eines Längsdifferentials. Ein solches müßte allerdings sperrbar sein, um auch dann noch einen Vortrieb zu erzielen, wenn beide Räder einer angetriebenen Achse die Bodenhaftung vollständig verlieren und durchdrehen, und würde in gesperrtem Zustand die Antriebsstränge nicht verspannungsfrei halten können.

Ein in einfacher Weise ausgebildeter Antrieb ist dadurch gegeben, daß gemäß Anspruch 2 die Abtriebswellen der Hydromotoren über eine schaltbare Kupplung (Reibungslamellenkupplung) miteinander verbindbar sind und jede Abtriebswelle über einen Getriebestrang mit einer der Fahrzeugachsen trieblich verbunden ist.

Ein Ausführungsbeispiel der Erfindung ist im folgenden anhand einer Zeichnung, die eine schematische Darstellung des Antriebes zeigt, näher erläutert.

Eine Brennkraftmaschine 1 ist über eine Kupplung 2 treibend mit der Eingangswelle 3 eines leistungsverzweigenden Umlaufrädergetriebe 4 verbunden. Eine erste Ausgangswelle 5 des Umlaufrädergetriebes 4 treibt unmittelbar das Ausgleichsgetriebe 6 der Hinterachse H eines Nutzfahrzeuges an. Eine zweite Ausgangswelle 7 treibt über eine Zahnradstufe 8,9 eine herkömmlich verstellbare Hydropumpe 10 an, die über nicht gezeigte Hydraulikleitungen zwei parallel geschaltete, ebenfalls herkömmlich verstellbare Hydraulikmotoren 11,12 mit miteinander fluchtenden Abtriebswellen 13,14 antreibt. Die Abtriebswelle 13 des Hydromotors 11 treibt über eine Zahnradstufe 15,16 die erste Ausgangswelle 5 des Umlaufrädergetriebes. Die Abtriebswelle 14 des Hydromotors 12 treibt den zur Vorderachse V führenden Antriebsstrang 17 über eine Zahnradstufe 18,19 an. Beide Abtriebswellen 13,14 sind mittels einer Reibungslamellenkupplung 20 miteinander kuppelbar.

Die Verstellung der Hydropumpe 10 erfolgt in Abhängigkeit von der Leistungsanforderung, die der Fahrer durch entsprechende Verstellung des Gaspedals und/oder eines Fahrgeschwindigkeitshebels vorgibt. Die Verstellung der Hydromotoren 11,12 erfolgt durch eine nicht gezeigte Regeleinrichtung, die bei geöffneter Reibungslamellenkupplung 20 beide Hydromotoren 11,12 unabhängig voneinander im Sinne einer optimalen Zugkraftübertragung an den Fahrzeugachsen verstellt.

Während des Fahrzeugeinsatzes ist die Reibungslamellenkupplung 20 normalerweise geöffnet, so daß die Regeleinrichtung durch gesonderte Verstellung der Hydromotoren 11,12 die zur Verfügung stehende Antriebsleistung den jeweiligen Betriebsbedingungen entsprechend auf die Fahrzeugachsen verteilt oder das Drehzahlverhältnis zwischen den Rädern der beiden Fahrzeugachsen stufenlos ändert. Unabhängig von der gewählten Verteilung fällt dabei auf Grund des erfindungsgemäßen Antriebs der auf die vordere Fahrzeugachse V entfallende Leistungsanteil bis zum Erreichen der maximalen Fahrgeschwindigkeit bis auf Null oder nahe Null ab.

Die erstgenannte Maßnahme einer Leistungsverteilung ist sinnvoll, um den Schlupf aller angetriebenen Räder auch bei einer Laständerung an den Fahrzeugachsen möglichst gleich und konstant zu halten, da so schwere Zugarbeiten, wie z. B. das mit großem Radschlupf einhergehende Pflügen, nur dann ökonomisch, d. h. boden-, reifen- und antriebsschonend, ausführbar sind.

Eine Änderung des Drehzahlverhältnisses der Räder wird dann benötigt, wenn sehr enge Kurven boden- und reifenschonend zu durchfahren sind. Es wird dann entsprechend der Größe des augenblicklichen Lenkwinkels der Vorderräder die Drehzahl der Abtriebswelle 14 des die Vorderachse V antreibenden Hydromotors 12 stufenlos erhöht.

Verlieren die angetriebenen Räder z. B. der hinteren Fahrzeugachse H bei extrem einseitiger Achsbelastung und hohem Zugkraftbedarf ihre Fähigkeit zur Zugkraftübertragung, so schließt die Regeleinrichtung die Reibungslamellenkupplung 20. In diesem Fall wird der Leistungsanteil der Hinterachse über die Zahnradstufe 15,16, die Reibungslamellenkupplung 20 und die andere Zahnradstufe 18,19 zur vorderen Fahrzeugachse V umgeleitet. Beide Achsen werden somit vorübergehend mit konstantem Drehzahlverhältnis angetrieben und bis zu 100 % des möglichen Getriebeausgangsmoments können über eine Achse übertragen werden. Entsprechendes gilt, wenn die angetriebenen Räder der vorderen Fahrzeugachse auf glattem Untergrund ihr Kraftübertragungsvermögen einbüßen.

Die Sensoren für die Ermittlung des Lenkwinkels der gelenkten Räder sowie der Raddrehzahlen und die Einrichtung zur Verarbeitung der von den Sensoren gelieferten Signale gehören ebenso wie die Ausbildung der Regeleinrichtung nicht zum Erfindungsumfang und werden als bekannt vorausgesetzt.

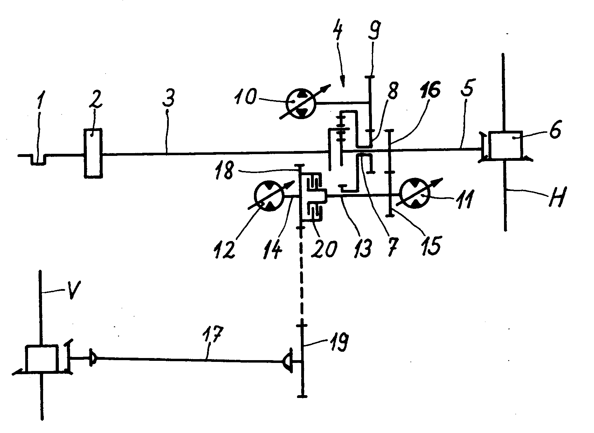

## Patentansprüche

1. Antrieb für zweiachsige land- und/oder bauwirtschaftlich nutzbare Fahrzeuge mit einem hydrostatisch-mechanischen Leistungsverzweigungsgetriebe, bei dem ein Teil der Fahrantriebsleistung einer Brennkraftmaschine (1) zum Antrieb mindestens einer verstellbaren Hydropumpe (10) dient, die mit mindestens zwei verstellbaren Hydromotoren (11,12) zusammenarbeitet, und bei dem der Rest der Fahrantriebsleistung der Brennkraftmaschine (1) unter Umgehung der Hydropumpe (10) den Fahrzeugachsen zugeführt wird,
**dadurch gekennzeichnet**,
daß jeder Fahrzeugachse (V,H) mindestens ein Hydromotor (11,12) antriebsmäßig zugeordnet ist, wobei die Hydromotoren (11,12) wahlweise gemeinsam oder voneinander unabhängig verstellbar sind.

2. Antrieb nach Anspruch 1,
**dadurch gekennzeichnet**,
daß die Abtriebswellen (13,14) der Hydromotoren (11,12) über eine schaltbare Kupplung (Reibungslamellenkupplung (20)) miteinander verbindbar sind und jede Abtriebswelle (13,14) über einen Getriebestrang mit einer der Fahrzeugachsen (H,V) trieblich verbunden ist.

3. Antrieb nach den Ansprüchen 1 und 2,
**dadurch gekennzeichnet**,
daß mindestens ein Antriebsstrang (17) eine Trennkupplung enthält.
